# EUROPEAN PATENT APPLICATION

(11) **EP 4 507 017 A1**
(43) Date of publication of application: **12.02.2025**
(21) Application number: 23912598.2
(22) Date of filing: 23.11.2023
(51) Int. Cl.: H01M 4/04, B65H 3/46, B65H 3/08

(54) **ELECTRODE SUPPLY APPARATUS AND ELECTRODE ASSEMBLY MANUFACTURING APPARATUS USING SAME, AND ELECTRODE SUPPLY METHOD AND ELECTRODE ASSEMBLY MANUFACTURING METHOD USING SAME**

(30) Priority: 26.12.2022 KR 20220184454
(71) Applicant: LG Energy Solution, Ltd., Seoul 07335 (KR)
(72) Inventor: KIM, Jong Seok, Daejeon 34122 (KR); KIM, Yong Nam, Daejeon 34122 (KR); YOON, Se Hyun, Daejeon 34122 (KR)
(74) Representative: Goddar, Heinz J.
(86) International application number: PCT/KR2023/019012
(87) International publication number: WO 2024/143922

(57) **Abstract**

The present invention provides an electrode supply device comprising: an electrode magazine unit in which a plurality of electrodes are stacked; and an electrode pick-up unit configured to pick up an uppermost first electrode among the plurality of electrodes, wherein at least one of the electrode magazine unit and the electrode pick-up unit comprises a heating unit configured to heat the first electrode and a second electrode adjacent to the first electrode to expand an air layer between the first electrode and the second electrode.

## Description

### [Technical Field]

This application claims priority to and the benefit of Korean Patent Application No. 10-2022-0184454 filed in the Korean Intellectual Property Office on December 26, 2022, the entire contents of which are incorporated herein by reference.

The present invention relates to an electrode supply device, an electrode assembly manufacturing apparatus using the electrode supply device, an electrode supply method, and an electrode assembly manufacturing method using the electrode supply method.

### [Background Art]

Secondary batteries can be recharged, unlike primary batteries, and may be formed to have a small size and a large capacity. Accordingly, a lot of research and development on the secondary batteries are currently in progress. Along with developments in this technology and an increase in demand for mobile devices, the demand for secondary batteries as an energy source is sharply increasing.

Secondary batteries are classified into coin type batteries, cylindrical type batteries, prismatic type batteries, and pouch type batteries according to a shape of a battery case. In a secondary battery, an electrode assembly mounted inside a battery case is a chargeable and dischargeable power generating device having a structure in which electrodes and a separator are stacked.

The electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack-type electrode assembly in which a plurality of positive and negative electrodes with a separator interposed therebetween are sequentially stacked, and a stack and folding-type electrode assembly in which stack-type unit cells are wound with a separation film having a long length.

The electrode assembly is mostly manufactured by receiving individual electrodes from a magazine in which a plurality of single sheet-type electrodes are stacked. There is a problem that defects occur in the manufactured electrode assembly because an electrode to be supplied among the plurality of single sheet-type electrodes stacked in the magazine is not properly separated during the manufacturing process.

Therefore, there is a need for technology to properly separate an electrode to be supplied among the plurality of electrodes stacked in the magazine.

### [Citation List]

### [Patent Literature]

(Patent Literature 1) Korean Patent Application Publication No. 10-2013-0027918

### [Detailed Description of the Invention]

### [Technical Problem]

The present invention is to provide an electrode supply device, an electrode assembly manufacturing apparatus using the electrode supply device, an electrode supply method, and an electrode assembly manufacturing method using the electrode supply method.

### [Technical Solution]

An exemplary embodiment of the present invention provides an electrode supply device including: an electrode magazine unit in which a plurality of electrodes are stacked; and an electrode pick-up unit configured to pick up an uppermost first electrode among the plurality of electrodes, wherein at least one of the electrode magazine unit and the electrode pick-up unit includes a heating unit configured to heat the first electrode and a second electrode adjacent to the first electrode to expand an air layer between the first electrode and the second electrode.

An exemplary embodiment of the present invention provides an electrode assembly manufacturing apparatus for manufacturing an electrode assembly in which a positive electrode and a negative electrode are alternately arranged between folds of a separator, the electrode assembly manufacturing apparatus including: a positive electrode supply unit configured to supply the positive electrode to a stack table side; a negative electrode supply unit configured to supply the negative electrode to the stack table side; a separator supply unit configured to supply the separator to the stack table side; a stack table on which a stack in which the positive electrode, the separator, and the negative electrode are stacked such that the positive electrode and the negative electrode are alternately arranged between the folds of the separator is manufactured; and a press unit configured to heat and press the stack to adhere the positive electrode, the separator, and the negative electrode therebetween, thereby manufacturing an electrode assembly, wherein at least one of the positive electrode supply unit and the negative electrode supply unit includes the above-described electrode supply device.

An exemplary embodiment of the present invention provides an electrode supply method including: heating an uppermost first electrode and a second electrode adjacent to the first electrode among a plurality of electrodes stacked in an electrode magazine unit to expand an air layer between the first electrode and the second electrode; and picking up, conveying, and supplying the first electrode to a stack table side.

An exemplary embodiment of the present invention provides an electrode assembly manufacturing method for manufacturing an electrode assembly in which a positive electrode and a negative electrode are alternately arranged between folds of a separator, the electrode assembly manufacturing method including: supplying the positive electrode to a stack table side; supplying the negative electrode to the stack table side; supplying the separator to the stack table side; manufacturing a stack by stacking the positive electrode, the separator, and the negative electrode on a stack table such that the positive electrode and the negative electrode are alternately arranged between the folds of the separator; and heating and pressing the stack to adhere the positive electrode, the separator, and the negative electrode therebetween, thereby manufacturing an electrode assembly, wherein at least one of the supplying the positive electrode to the stack table side and the supplying the negative electrode to the stack table side includes the above-described electrode supply method.

### [Advantageous Effects]

The electrode supply method, the electrode supply device, the electrode assembly manufacturing apparatus using the device, and the electrode assembly manufacturing method using the method according to the exemplary embodiments of the present invention can prevent a problem of separation of multiple sheets caused by contact between an electrode surface and an electrode surface or contact between the electrode surface and the separator.

The electrode supply method, the electrode supply device, the electrode assembly manufacturing apparatus using the device, and the electrode assembly manufacturing method using the method according to the exemplary embodiments of the present invention can prevent the problem of separation of multiple sheets to thus increase productivity.

### [Brief Description of Drawings]

FIG. 1 is a view showing a process of separating an electrode in an electrode assembly manufacturing method and an electrode assembly manufacturing apparatus according to an exemplary embodiment of the present invention.
FIG. 2 is a plan view illustratively showing an electrode assembly manufacturing apparatus according to an exemplary embodiment of the present invention.
FIG. 3 is a front view showing a concept of the electrode assembly manufacturing apparatus according to the exemplary embodiment of the present invention.
FIG. 4 is a cross-sectional view illustratively showing a general electrode assembly.
FIG. 5 is a conceptual view showing a pressing process in the electrode assembly manufacturing method or electrode assembly manufacturing apparatus according to the exemplary embodiment of the present invention.
FIG. 6(a) is a perspective view showing a first press unit 50 according to an exemplary embodiment of the present invention, and FIG. 6(b) is a perspective view showing a second press unit 60 according to an exemplary embodiment of the present invention.
FIG. 7 is a perspective view showing a stack table in the electrode assembly manufacturing apparatus according to the exemplary embodiment of the present invention.
FIG. 8 is a perspective view showing a positive electrode seating table in the electrode assembly manufacturing apparatus according to the exemplary embodiment of the present invention.
FIG. 9 is a perspective view showing a negative electrode seating table in the electrode assembly manufacturing apparatus according to the exemplary embodiment of the present invention.
FIG. 10 is a perspective view showing a first suction head in the electrode assembly manufacturing apparatus according to the exemplary embodiment of the present invention.
FIG. 11 is a bottom view showing the first suction head in the electrode assembly manufacturing apparatus according to the exemplary embodiment of the present invention.
FIG. 12 is a plan view showing a holding mechanism and a stack table in the electrode assembly manufacturing apparatus according to the exemplary embodiment of the present invention.

### [Best Mode]

Hereinafter, exemplary embodiments of the present invention will be described in detail such that one skilled in the art to which the present invention belongs can readily implement the same. However, the present invention may be embodied in various different forms and is not limited to the configurations described herein.

When one part "includes", "comprises" or "has" one constituent element in the present specification, unless otherwise specifically described, this does not mean that another constitutional element is excluded but means that another constitutional element may be further included.

In the present specification, 'p to q' means a range of 'p or more and q or less'.

When describing the present invention, detailed descriptions of related known technologies that may unnecessarily obscure the gist of the present invention will be omitted.

An exemplary embodiment of the present invention provides an electrode supply device including: an electrode magazine unit in which a plurality of electrodes are stacked; and an electrode pick-up unit configured to pick up an uppermost first electrode among the plurality of electrodes, wherein at least one of the electrode magazine unit and the electrode pick-up unit includes a heating unit configured to heat the first electrode and a second electrode adjacent to the first electrode to expand an air layer between the first electrode and the second electrode.

In the present specification, the 'electrode' means including the electrode and/or a semi-finished product of the electrode. In addition, the semi-finished product of the electrode refers to all semi-assembled products related to the electrode, such as a coated electrode, a rolled electrode, a notched electrode, a mono-cell, a half-cell, and a bi-cell manufactured in the process of manufacturing an electrode assembly and a secondary battery including the electrode assembly. That is, in the present specification, electrodes or semi-finished products of electrodes may be stacked in the electrode magazine unit.

At least one of the electrode magazine unit and the electrode pick-up unit of the electrode supply device according to the embodiment of the present invention includes the heating unit, and the heating unit may heat the uppermost first electrode and the second electrode adjacent to the first electrode among the plurality of electrodes stacked in the electrode magazine unit, thereby expanding the air layer between the first electrode and the second electrode. By expanding the air layer between the first electrode and the second electrode in this way, an advantage that only the uppermost electrode can be separated is obtained. In this way, when only the uppermost electrode is separated, a problem of separation of multiple sheets caused by contact between the electrode surface and the electrode surface or contact between the electrode surface and the separator can be prevented.

As a result, productivity can be increased by using the electrode supply device and the electrode assembly manufacturing apparatus using the same according to the exemplary embodiment of the present invention.

At least one of the electrode magazine unit and the electrode pick-up unit of the electrode supply device according to an exemplary embodiment of the present invention may include a heating unit for heating the first electrode and the second electrode to expand an air layer between the first electrode and the second electrode.

In an exemplary embodiment of the present invention, the electrode magazine unit may include a heating unit for heating an uppermost first electrode and a second electrode adjacent to the first electrode among the plurality of electrodes stacked in the electrode magazine unit, thereby expanding an air layer between the first electrode and the second electrode. When the electrode magazine unit includes the heating unit, the uppermost first electrode and the second electrode adjacent to the uppermost first electrode can be easily heated therebetween by the heating unit, regardless of a height of the electrodes stacked inside the electrode magazine unit.

In an exemplary embodiment of the present invention, the electrode pick-up unit may include a heating unit for heating an uppermost first electrode and a second electrode adjacent to the first electrode among the plurality of electrodes stacked in the electrode magazine unit, thereby expanding an air layer between the first electrode and the second electrode. When the electrode pick-up unit includes the heating unit, the air layer between the uppermost first electrode and the second electrode adjacent to the uppermost first electrode is expanded by the heating unit, which makes it possible to facilitate separation of the electrodes, and to preheat an individual electrode, facilitating adhesion in a uniform state when heating and pressing a stack including the electrodes and the separator to adhere the electrodes and the separator.

In an exemplary embodiment of the present invention, the electrode magazine unit and the electrode pick-up unit may each include a heating unit for heating an uppermost first electrode and a second electrode adjacent to the first electrode among the plurality of electrodes stacked in the electrode magazine unit, thereby expanding an air layer between the first electrode and the second electrode. Since both the electrode magazine unit and the electrode pick-up unit include the heating units, the above-described advantages can be achieved simultaneously.

The electrode supply device according to an exemplary embodiment of the present invention may include an electrode pick-up unit for picking up the uppermost first electrode among the plurality of electrodes stacked in the electrode magazine unit.

More specifically, in an exemplary embodiment of the present invention, the electrode pick-up unit may include an electrode fixing unit for fixing the first electrode; and an electrode conveying unit for conveying the first electrode fixed by the electrode fixing unit to the stack table side.

In an exemplary embodiment of the present invention, an electrode seating table may be further included on which an electrode conveyed by the electrode pick-up unit is seated and positionally aligned. The electrode seated on the electrode seating table may be stacked on the stack table by an electrode stacking unit, which will be described below.

In an exemplary embodiment of the present invention, a temperature sensor unit for measuring surface temperatures of the first electrode and the second electrode; and a temperature control unit for adjusting a temperature of the heating unit so that the surface temperatures measured by the temperature sensor unit satisfy a management temperature range.

In an exemplary embodiment of the present invention, the management temperature range may be 40°C to 140°C, preferably 50°C to 120°C, and more preferably 60°C to 100°C. When the temperature of the heating unit is adjusted within a range in which the surface temperatures of the first electrode and the second electrode satisfy the management temperature range, the air layer between the first electrode and the second electrode can be expanded in a short time without damaging the electrodes, which further facilitates the electrode separation.

In an exemplary embodiment of the present invention, the heating unit may include a non-contact heat source not in physical contact with the first electrode and the second electrode. The advantage of using the non-contact heat source is that it is easy to transfer heat to the electrodes only when necessary.

In addition, in an exemplary embodiment of the present invention, the non-contact heat source may be a radiant heat-type heat source, an induction heating-type heat source, or a laser-type heat source but is not limited thereto. That is, an appropriate heat source may be selected depending on application environments.

An exemplary embodiment of the present invention provides an electrode assembly manufacturing apparatus for manufacturing an electrode assembly in which a positive electrode and a negative electrode are alternately arranged between folds of a separator, the electrode assembly manufacturing apparatus including: a positive electrode supply unit configured to supply the positive electrode to a stack table side; a negative electrode supply unit configured to supply the negative electrode to the stack table side; a separator supply unit configured to supply the separator to the stack table side; the stack table on which a stack in which the positive electrode, the separator, and the negative electrode are stacked such that the positive electrode and the negative electrode are alternately arranged between the folds of the separator is manufactured; and a press unit configured to heat and press the stack to adhere the positive electrode, the separator, and the negative electrode therebetween, thereby manufacturing an electrode assembly, wherein at least one of the positive electrode supply unit and the negative electrode supply unit includes the above-described electrode supply device.

In an exemplary embodiment of the present invention, the positive electrode supply unit includes the electrode supply device.

In an exemplary embodiment of the present invention, the negative electrode supply unit includes the electrode supply device.

In an exemplary embodiment of the present invention, the positive electrode supply unit and the negative electrode supply unit each include the electrode supply device.

That is, both the positive electrode supply unit and the negative electrode supply unit may supply the positive electrode and the negative electrode, respectively, using the electrode supply device according to the present invention.

In other words, the electrode assembly manufacturing apparatus according to an exemplary embodiment of the present invention may include an electrode supply unit for supplying an electrode to the stack table, and the electrode supply unit may include an electrode seating table on which an electrode is seated before the electrode is stacked on the stack table by the electrode stacking unit. In addition, an electrode conveyed by the electrode supply device according to the present invention may be seated and positionally aligned on the electrode seating table. The electrode whose position is aligned may be stacked on the stack table by the electrode stacking unit. In addition, the electrode may be a positive electrode or a negative electrode.

In the present specification, manufacturing a stack in which the positive electrode, the separator, and the negative electrode are stacked such that the positive electrode and the negative electrode are alternately arranged between the folds of the separator is referred to as zigzag folding.

In the present specification, the stack may correspond to an unfinished electrode assembly. Additionally, in the present specification, a top end and a bottom end of the electrode assembly may be located at positions corresponding to an upper surface and a lower surface of the stack, respectively, or positions corresponding to a bottom surface and a top surface of the unfinished electrode assembly.

That is, the electrode assembly manufacturing apparatus according to an exemplary embodiment of the present invention is an electrode assembly manufacturing apparatus for manufacturing an electrode assembly in which a positive electrode and a negative electrode are alternately arranged between folds of a separator, and may include a stack table on which the positive electrode, the separator, and the negative electrode are stacked in a form of a stack in which the positive electrode and the negative electrode are alternately arranged between the folds of the separator; a positive electrode supply unit for supplying the positive electrode to the stack table; a negative electrode supply unit for supplying the negative electrode to the stack table; a separator supply unit for supplying the separator to the stack table; and a press unit for heating and pressing the stack to adhere the positive electrode, the separator, and the negative electrode therebetween, wherein the positive electrode supply unit may include a positive electrode magazine unit in which a plurality of positive electrodes are stacked and a positive electrode stacking unit for picking up and conveying an uppermost first positive electrode among the plurality of positive electrodes stacked in the positive electrode magazine unit, at least one of the positive electrode magazine unit and the positive electrode stacking unit may include a first heating unit for heating the uppermost first positive electrode and a second positive electrode adjacent to the first positive electrode among the plurality of positive electrodes stacked in the positive electrode magazine unit, thereby expanding an air layer between the first positive electrode and the second positive electrode, the negative electrode supply unit may include a negative electrode magazine unit in which a plurality of negative electrodes are stacked and a negative electrode stacking unit for picking up and conveying an uppermost first negative electrode among the plurality of negative electrodes stacked in the negative electrode magazine unit, and at least one of the negative electrode magazine unit and the negative electrode stacking unit may include a second heating unit for heating the uppermost first negative electrode and a second negative electrode adjacent to the first negative electrode among the plurality of negative electrodes stacked in the negative electrode magazine unit, thereby expanding an air layer between the first negative electrode and the second negative electrode.

In addition, in the electrode assembly manufacturing apparatus according to an exemplary embodiment of the present invention, the positive electrode supply unit may include a positive electrode seating table on which the positive electrode is seated before the positive electrode is stacked on the stack table by the positive electrode stacking unit, and the negative electrode supply unit may include a negative electrode seating table on which the negative electrode is seated before the negative electrode is stacked on the stack table by the negative electrode stacking unit.

In an exemplary embodiment of the present invention, in order to stack the positive electrode, the separator, and the negative electrode such that the positive electrode and the negative electrode are alternately arranged between the folds of the separator, a method in which the stack table is moved left and right, a method in which the separator is moved left and right or a method in which the stack table is rotated may be used, and general techniques in the relevant field may be applied to such methods.

The electrode assembly manufacturing apparatus according to an exemplary embodiment of the present invention may include a stack table moving unit for moving the stack table left and right, or a separator guide unit for moving the separator left and right. In addition, the stack table moving unit and the separator guide unit are not limited in forms as long as they respectively perform the functions of moving the stack table and the separator left and right, and devices generally used in the relevant field may be used.

In an exemplary embodiment of the present invention, the press unit may further include a pair of pressing blocks and a press heater for heating the pressing blocks, in which the pair of pressing blocks may move in directions facing each other to surface-press the stack and the press heater may heat the stack. In this case, in an exemplary embodiment of the present invention, the pair of pressing blocks may include the press heater therein.

In an exemplary embodiment of the present invention, the stack may be heated using a heater included inside the stack table.

For pressure and temperature conditions of heating and pressing by the press unit, description of a condition of a heat-press step described below may be applied. The same also applies to the time (time condition) during which heating and pressure are applied.

Here, the pressure condition refers to a pressure applied by the pair of pressing blocks (or the pressing blocks for the stack table), and the temperature condition refers to a temperature of heat applied by the press heater or a heater included inside the stack table.

In an exemplary embodiment of the present invention, a gripper for fixing the stack, in which the positive electrode, the separator, and the negative electrode are stacked, during the heating and pressing by the press unit may be further included. Specifically, the gripper may be applied in a first heat-press step described later.

In an exemplary embodiment of the present invention, the press unit may include a first press unit and a second press unit. Specifically, the first press unit and the second press unit may be applied to a first heat-press step and a second heat-press step, respectively, described below, and for the heating condition and pressing condition, descriptions of the first heat-press step and the second heat-press step described below may be applied.

In an exemplary embodiment of the present invention, the first press unit may include a pair of first pressing blocks, pressing surfaces of the pair of first pressing blocks may include a groove of a shape corresponding to the gripper, and the pressing surfaces other than the grooves may be provided as flat surfaces. That is, the first press unit may be applied in the first heat-press step described above.

In an exemplary embodiment of the present invention, the second press unit may include a pair of second pressing blocks, and pressing surfaces of the pair of second pressing blocks may be provided as flat surfaces. That is, the second press unit may be applied in the second heat-press step described above.

The electrode assembly manufacturing apparatus according to an exemplary embodiment of the present invention may further include a holding mechanism for gripping and fixing the stack during a process of manufacturing the stack.

In the present specification, the "holding mechanism" serves to grip a stack stacked on the stack table in order to stack a positive electrode or a negative electrode during a process of manufacturing the stack in which the positive electrode, the separator, and the negative electrode are stacked on the stack table such that the positive electrode and the negative electrode are alternately arranged between the folds of the separator, and has a different function from the gripper for gripping the stack during a process of heating and pressing the stack. For the specific operating process of the holding mechanism, the description of the electrode assembly manufacturing method described below may be referred to.

An exemplary embodiment of the present invention provides an electrode supply method including the steps of: heating an uppermost first electrode and a second electrode adjacent to the first electrode among a plurality of electrodes stacked in an electrode magazine unit to expand an air layer between the first electrode and the second electrode; and picking up, conveying, and supplying the first electrode to a stack table side.

The electrode assembly manufacturing method according to an exemplary embodiment of the present invention may heat an uppermost first electrode and a second electrode adjacent to the first electrode among a plurality of electrodes stacked in an electrode magazine unit to expand an air layer between the first electrode and the second electrode. By expanding the air layer between the first electrode and the second electrode in this way, an advantage that only the uppermost electrode can be separated is obtained. In this way, when only the uppermost electrode is separated, a problem of separation of multiple sheets caused by contact between the electrode surface and the electrode surface or contact between the electrode surface and the separator can be prevented.

As a result, productivity can be increased by using the electrode supply method and the electrode assembly manufacturing method using the same according to the exemplary embodiment of the present invention.

In an exemplary embodiment of the present invention, the electrode supply method may further include the step of stacking an electrode in the electrode magazine unit. More specifically, in an exemplary embodiment of the present invention, the electrode supply method may further include the step of stacking two or more electrodes in the electrode magazine unit.

In an exemplary embodiment of the present invention, the step of picking up, conveying, and supplying the uppermost first electrode among the electrodes stacked in the electrode magazine unit to a stack table side may include the steps of fixing the first electrode; and conveying the fixed first electrode to the stack table side.

In an exemplary embodiment of the present invention, the electrode supply method may further include the step of aligning a position of the conveyed electrode before supplying the electrode to the stack table. For the above step, the description of the electrode seating table described above may be applied.

In an exemplary embodiment of the present invention, the step of heating the uppermost first electrode and the second electrode adjacent to the first electrode among the plurality of electrodes stacked in the electrode magazine unit may include the steps of measuring surface temperatures of the first electrode and the second electrode; and performing heating while adjusting a temperature of a heat source so that the measured surface temperatures satisfy a management temperature range. In this case, in an exemplary embodiment of the present invention, the management temperature range may be 40°C to 140°C, preferably 50°C to 120°C, and more preferably 60°C to 100°C. As described above, when the temperature of the heating unit is adjusted within a range in which the surface temperatures of the uppermost first electrode and the second electrode adjacent to the first electrode satisfy the management temperature range, the air layer between the first electrode and the second electrode can be expanded in a short time without damaging the electrodes, which further facilitates the electrode separation.

In an exemplary embodiment of the present invention, the heat source may be a non-contact heat source not in physical contact with the first electrode and the second electrode. In addition, the non-contact heat source may be a radiant heat-type heat source, an induction heating-type heat source, or a laser-type heat source but is not limited thereto. That is, an appropriate heat source may be selected depending on application environments. As described above, the advantage of using the non-contact heat source is that it is easy to transfer heat to the electrodes only when necessary.

An exemplary embodiment of the present invention provides an electrode assembly manufacturing method for manufacturing an electrode assembly in which a positive electrode and a negative electrode are alternately arranged between folds of a separator, the electrode assembly manufacturing method including the steps of: supplying the positive electrode to a stack table side; supplying the negative electrode to the stack table side; supplying the separator to the stack table side; manufacturing a stack by stacking the positive electrode, the separator, and the negative electrode on the stack table such that the positive electrode and the negative electrode are alternately arranged between the folds of the separator; and heating and pressing the stack to adhere the positive electrode, the separator, and the negative electrode therebetween, thereby manufacturing an electrode assembly, wherein at least one of the supplying the positive electrode to the stack table side and the supplying the negative electrode to the stack table side includes the above-described electrode supply method.

That is, in the electrode assembly manufacturing method according to an exemplary embodiment of the present invention, the electrode refers to a positive electrode or a negative electrode, and the step of supplying the electrode to the stack table may include the steps of supplying a positive electrode to the stack table; and supplying a negative electrode to the stack table, and the electrode assembly manufacturing method may further include the steps of supplying a separator to the stack table; manufacturing a stack by stacking the positive electrode, the separator, and the negative electrode on the stack table such that the positive electrode and the negative electrode are alternately arranged between the folds of the separator; and manufacturing an electrode assembly by heating and pressing the stack to adhere the positive electrode, the separator, and the negative electrode therebetween. In this case, the step of manufacturing the electrode assembly by heating and pressing the stack to adhere the positive electrode, the separator, and the negative electrode therebetween may be expressed as a heat-press step.

That is, the electrode assembly manufacturing method according to an exemplary embodiment of the present invention is an electrode assembly manufacturing method for manufacturing an electrode assembly in which a positive electrode and a negative electrode are alternately arranged between folds of a separator, and may include the steps of supplying the separator to a stack table; supplying the positive electrode to the stack table; supplying the negative electrode to the stack table; and manufacturing a stack by stacking the positive electrode, the separator, and the negative electrode on the stack table such that the positive electrode and the negative electrode are alternately arranged between the folds of the separator; and a heat-press step of heating and pressing the stack, wherein the step of supplying the positive electrode to the stack table may include the steps of heating an uppermost first positive electrode and a second positive electrode adjacent to the first positive electrode among a plurality of positive electrodes stacked in a positive electrode magazine unit to expand an air layer between the first positive electrode and the second positive electrode; and picking up, conveying, and supplying the uppermost first positive electrode among the plurality of positive electrodes stacked in the positive electrode magazine unit to the stack table, and the step of supplying the negative electrode to the stack table may include the steps of heating an uppermost first negative electrode and a second negative electrode adjacent to the first negative electrode among a plurality of negative electrodes stacked in a negative electrode magazine unit to expand an air layer between the first negative electrode and the second negative electrode; and picking up, conveying, and supplying the uppermost first negative electrode among the plurality of negative electrodes stacked in the negative electrode magazine unit to the stack table.

In an exemplary embodiment of the present invention, the step of supplying the positive electrode to the stack table includes the electrode supply method.

In an exemplary embodiment of the present invention, the step of supplying the negative electrode to the stack table includes the electrode supply method.

In an exemplary embodiment of the present invention, the step of supplying the positive electrode to the stack table and the step of supplying the negative electrode to the stack table each include the electrode supply method.

That is, both the step of supplying the positive electrode to the stack table side and the step of supplying the negative electrode to the stack table side may be configured to supply the positive electrode and the negative electrode, respectively, using the electrode supply method according to the present invention.

In an exemplary embodiment of the present invention, the step of manufacturing the stack by stacking the positive electrode, the separator, and the negative electrode on the stack table such that the positive electrode and the negative electrode are alternately arranged between the folds of the separator may include the steps of:
(S1) stacking the negative electrode on the stack table;
(S2) stacking the separator on the stack table such that the separator covers an upper surface of the negative electrode stacked on the stack table;
(S3) stacking the positive electrode on a surface of the separator covering the upper surface of the negative electrode opposite to the surface in contact with the negative electrode;
(S4) additionally supplying the separator to cover an upper surface of the positive electrode;
(S5) stacking the negative electrode on a surface of the separator covering the upper surface of the positive electrode opposite to the surface in contact with the positive electrode; and
(S6) additionally supplying the separator to cover an upper surface of the negative electrode, and
may be configured to repeat the steps (S1) to (S6) one or more times. That is, this case means a case where an electrode is first stacked on the stack table.

In an exemplary embodiment of the present invention, the step of manufacturing the stack by stacking the positive electrode, the separator, and the negative electrode on the stack table such that the positive electrode and the negative electrode are alternately arranged between the folded separators may include the steps of:
(SS1) stacking the separator on the stack table;
(SS2) stacking the positive electrode on an upper surface of the separator;
(SS3) additionally supplying the separator to cover an upper surface of the positive electrode;
(SS4) stacking the negative electrode on a surface of the separator covering the upper surface of the positive electrode opposite to the surface in contact with the positive electrode; and
(SS5) additionally supplying the separator to cover an upper surface of the negative electrode, and
may be configured to repeat the steps (SS1) to (SS5) one or more times. That is, this case means a case where a separator is first stacked on the stack table.

In an exemplary embodiment of the present invention, the step (S4), step (S6), step (SS3), and step (SS5), that is, the step of additionally supplying the separator to cover the upper surface of the positive electrode or negative electrode may be performed by one of a method in which the stack table is moved left and right, a method in which the separator is moved left and right, and a method in which the stack table is rotated.

In an exemplary embodiment of the present invention, the separator may be supplied in a form of a separator sheet. That is, the separator to be additionally supplied may be supplied in a continuous form. In addition, the "upper surface" may refer to a surface of the separator or electrode opposite to a surface facing the stack table.

That is, in order to stack the positive electrode, the separator, and the negative electrode such that the positive electrode and the negative electrode are alternately arranged between the folds of the separator, a method in which the stack table is moved left and right, a method in which the separator is moved left and right, or a method in which the stack table is rotated may be used, and general techniques in the relevant field may be applied to such methods.

In this case, the stack can be gripped by a holding mechanism to maintain alignment of the stack during the processes of adding the positive electrode, the negative electrode, and the separator, so that a stack in which the positive electrode and negative electrode are alternately arranged between the folds of the separator can be manufactured.

In an exemplary embodiment of the present application, the electrode assembly manufacturing method may further include a heat-press step of heating and pressing the stack along a stacking axis.

Further, in an exemplary embodiment of the present application, the heat-press step of heating and pressing the stack along the stacking axis may include the steps of moving the stack between a pair of pressing blocks including a press heater; surface-pressing the stack by the pair of pressing blocks moving in directions facing each other along the stacking axis; and heating the stack by the press heater.

Additionally, in an exemplary embodiment of the present application, the heat-press step may include: a first heat-press step of gripping the stack with a gripper and heating and pressing the stack; and a second heat-press step of stopping the gripping of the gripper and heating and pressing the stack after the first heat-press step.

In an exemplary embodiment of the present application, the first heat-press step may include the steps of fixing the stack by pressing an upper surface of the stack using a gripper; moving the stack fixed by the gripper between a pair of pressing blocks including a press heater; surface-pressing the fixed stack by the pair of pressing blocks moving in directions facing each other along a stacking axis of the stack; and heating the fixed stack by the press heater.

In an exemplary embodiment of the present application, the second heat-press step may include the steps of stopping heating and pressing of the stack after the first heat-press step; spacing the gripper apart from the stack; moving the stack from which the gripper is spaced apart between a pair of pressing blocks including a press heater; pressing the stack by the pair of pressing blocks moving in directions facing each other along a stacking axis of the stack from which the gripper is spaced apart; and heating the stack using the press heater.

In an exemplary embodiment of the present application, the pressing blocks used in the first heat-press step may have a groove corresponding to the gripper.

In an exemplary embodiment of the present application, the step of spacing the gripper apart from the stack may include the steps of stopping the pressing the upper surface of the stack using the gripper; and spacing the gripper apart from the stack.

In addition, the step of moving the stack between the pair of pressing blocks including the press heater in the heat-press step (including the first heat-press step and the second heat-press step) may include not only moving only the stack itself but also moving the stack together with the stack table in a state in which the stack is placed on the stack table. In this case, a target to be heated and pressed by the pair of pressing blocks and the press heaters may refer to the stack and the stack table.

In an exemplary embodiment of the present application, the first heat-press step may be configured to heat and press the stack under a temperature condition of 65°C to 90°C and a pressure condition of 1 MPa to 3 MPa for 10 seconds to 30 seconds. More preferably, the stack may be heated and pressed for 10 seconds to 20 seconds under a temperature condition of 65°C to 75°C and a pressure condition of 1.5 MPa to 2 MPa.

In an exemplary embodiment of the present application, the second heat-press step may be configured to heat and press the stack under a temperature condition of 50°C to 90°C and a pressure condition of 1 MPa to 6 MPa for 5 seconds to 60 seconds, preferably under a temperature condition of 65°C to 90°C and a pressure condition of 1.5 MPa to 6 MPa for 5 seconds to 30 seconds. More preferably, the stack may be heated and pressed for 7 seconds to 25 seconds under a temperature condition of 65°C to 85°C and a pressure condition of 3 MPa to 5.5 MPa.

When heated and pressed while satisfying the conditions described above, the adhesion of the electrodes and separator of the stack including the positive electrode, the separator, and the negative electrode may be easily obtained without damaging the positive electrode, the separator, and the negative electrode, and performance of the manufactured electrode assembly may be excellent.

Additionally, in an exemplary embodiment of the present application, the conditions of the second heat-press described above may be applied to the temperature condition, pressure condition, and time condition of the heat-press step. That is, the heat-press step may be configured to heat and press the stack under a temperature condition of 50°C to 90°C and a pressure condition of 1 MPa to 6 MPa for 5 seconds to 60 seconds, preferably at a temperature condition of 65°C to 90°C and a pressure condition of 1.5 MPa to 6 MPa for 5 seconds to 30 seconds. More preferably, the stack may be heated and pressed for 7 seconds to 25 seconds under a temperature condition of 65°C to 85°C and a pressure condition of 3 MPa to 5.5 MPa.

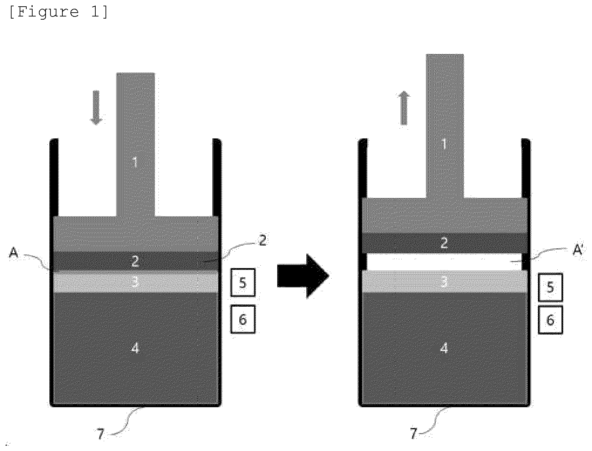

Hereinafter, the electrode assembly manufacturing method and the electrode assembly manufacturing apparatus according to an exemplary embodiment of the present invention will be described in more detail with reference to FIGS. 1 to 13.

FIG. 1 is a view showing a process of separating an electrode in an electrode supply method and an electrode supply device according to an exemplary embodiment of the present invention. As shown in FIG. 1, in an electrode magazine unit 7, an uppermost first electrode 2 among a plurality of stacked electrodes, a second electrode 3 adjacent to the first electrode, and a plurality of other electrodes 4 are stacked. In this case, the uppermost first electrode 2 among the stacked electrodes is picked up and conveyed by an electrode pick-up unit 1. A thin air layer A is formed between the first electrode 2 and the second electrode 3. In this case, the thin air layer A is heated by a heating unit (not shown) included in the electrode magazine unit 7 or/and the electrode pick-up unit 1. At this time, surface temperatures of the first electrode 2 and the second electrode 3 are measured by a temperature sensor unit 5, and in conjunction with the temperature sensor unit 5, a heating temperature of the heating unit is adjusted by a temperature control unit 6 for adjusting a temperature of the heating unit (not shown) so that the surface temperatures measured by the temperature sensor unit 5 satisfy a management temperature range.

As a result, the thin air layer A is heated to form an expanded air layer A', and accordingly, an interval between the uppermost first electrode 2 and the second electrode 3 adjacent to the first electrode among the plurality of stacked electrodes in the electrode magazine unit 7 is increased.

Since the interval between the first electrode 2 and the second electrode 3 is increased, the electrode pick-up unit 1 can pick up and convey only the uppermost first electrode 2 among the stacked electrodes.

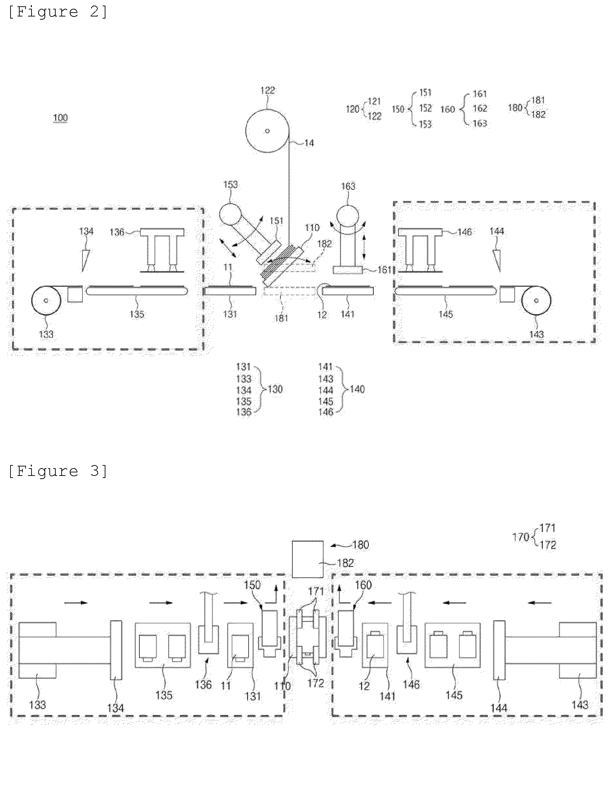

FIG. 2 is a plan view illustratively showing an electrode assembly manufacturing apparatus according to an exemplary embodiment of the present invention, and FIG. 3 is a front view showing a concept of the electrode assembly manufacturing apparatus according to the exemplary embodiment of the present invention. Here, for convenience, in FIG. 2, a holding mechanism 170 shown in FIG. 3 is omitted, and a press unit 180 positioned on a rear side in the plan view is indicated by the dotted line, and in FIG. 3, a separator supply unit 120 shown in FIG. 2 is omitted. For reference, the description related to FIG. 1 may be applied to the portion indicated by the dotted lines in FIGS. 2 and 3.

Referring to FIGS. 1 to 3, an electrode assembly manufacturing apparatus 100 according to an exemplary embodiment of the present invention includes a stack table 110, a separator supply unit 120 for supplying a separator 14, a positive electrode supply unit 130 for supplying a positive electrode 11, a negative electrode supply unit 140 for supplying a negative electrode 12, a positive electrode stacking unit 150 for stacking the positive electrode 11 on the stack table 110, a negative electrode stacking unit 160 for stacking the negative electrode 12 on the stack table 110, and a press unit 180 for adhering the positive electrode 11, the separator 14, and the negative electrode 12 therebetween. In addition, the electrode assembly manufacturing apparatus 100 according to an exemplary embodiment of the present invention may further include a holding mechanism 170 for fixing the positive electrode 11 and the negative electrode 12 when stacking the electrodes on the stack table 110. In this case, as shown in FIG. 1, the electrode magazine unit 7 is formed with the expanded air layer A' formed by heating the thin air layer A formed between the uppermost first electrode 2 and the second electrode 3 adjacent to the first electrode among the plurality of stacked electrodes, and accordingly, the interval between the first electrode 2 and the second electrode 3 is increased, which enables only the uppermost first electrode 2 among the stacked electrodes to be picked up and conveyed by the electrode pick-up unit 1.

In addition, in an exemplary embodiment of the present invention, the positive electrode, the separator, and the negative electrode may be each supplied to the stack table while being heated.

That is, the separator supply unit may supply the separator to the stack table while heating the separator, and the positive electrode supply unit and the negative electrode supply unit may supply the positive electrode and the negative electrode to the stack table while heating the positive electrode and the negative electrode, respectively.

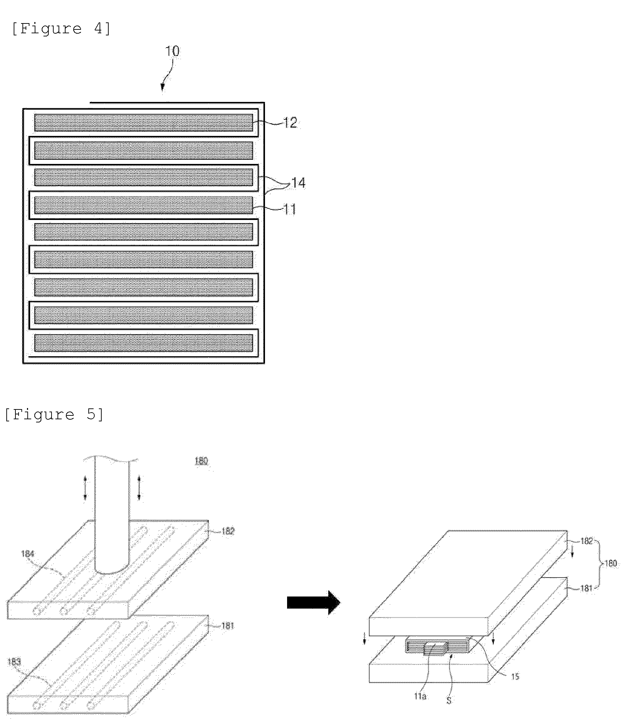

FIG. 4 is a cross-sectional view illustratively showing an electrode assembly.

Referring to FIGS. 2 to 4, the electrode assembly manufacturing apparatus 100 according to an exemplary embodiment of the present invention is an apparatus for manufacturing an electrode assembly 10 by stacking the positive electrode 11, the separator 14, and the negative electrode 12.

As shown in FIG. 3, the electrode assembly 10 is generally a chargeable/dischargeable power generating element and may be formed in such a shape that the positive electrode 11, the separator 14, and the negative electrode 12 are alternately stacked and assembled. Here, the electrode assembly 10 may have such a form that the separator 14 is folded in a zigzag shape, for example, and the positive electrode 11 and the negative electrode 12 are alternately arranged between the folds of the separator 14. In this case, as shown in FIG. 3, the electrode assembly 10 may be provided in such a form that the separator 14 surrounds the outermost of the electrode assembly.

In an exemplary embodiment of the present application, the separator supply unit may further include a separator roll on which the separator is wound. The separator wound on the separator roll may be gradually unwound and supplied to the stack table. That is, the separator may be in the form of a separator sheet.

FIG. 5 is a perspective view illustratively showing a press unit of an electrode assembly manufacturing apparatus according to an exemplary embodiment of the present invention and a state in which the press unit presses a stack in the electrode assembly manufacturing apparatus according to the exemplary embodiment of the present invention.

Referring to FIGS. 2, 3, and 5, a press unit 180 includes a pair of pressing blocks 181 and 182, the pair of pressing blocks 181 and 182 are moved in directions facing each other, and a stack of the positive electrode 11, the separator 14, and the negative electrode 12 may be arranged between the pressing blocks 181 and 182. Then, the press unit 180 presses the stacked positive electrode 11, separator 14, and negative electrode 12 while heating and pressing the stack, thereby adhering the positive electrode 11, the separator 14, and the negative electrode 12 therebetween.

In addition, the press unit 180 may further include press heaters 183 and 184 for heating the pair of pressing blocks 181 and 182, so that the pair of pressing blocks 181 and 182 can heat and press the stack. Accordingly, thermal fusion between the positive electrode 11, the separator 14, and the negative electrode 12 in the stack may be better achieved, resulting in more robust adhesion.

The pair of pressing blocks 181 and 182 may have a pressing surface, and horizontal and vertical lengths of the pressing surface may be greater than horizontal and vertical lengths of the stack. The pair of pressing blocks 181 and 182 may include a first pressing block 181 and a second pressing block 182, and the first pressing block 181 and the second pressing block 182 may be provided as rectangular blocks having a rectangular parallelepiped shape.

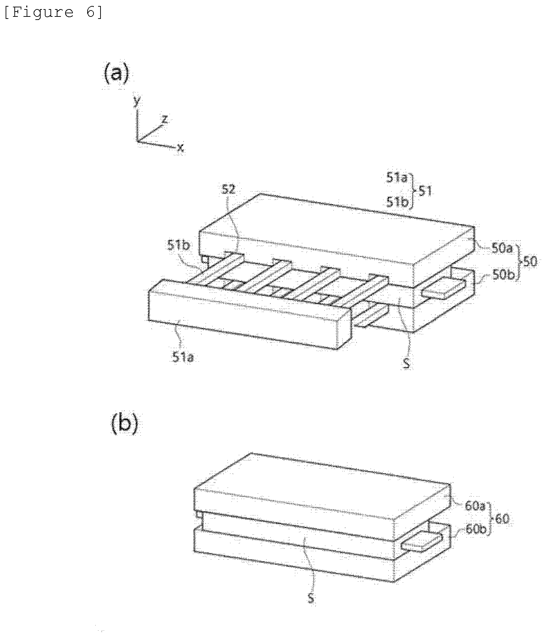

FIG. 6(a) is a perspective view showing a first press unit 50 according to an exemplary embodiment of the present invention, and FIG. 6(b) is a perspective view showing a second press unit 60 according to an exemplary embodiment of the present invention.

Referring to FIG. 6(a), the first press unit 50 may heat and press the stack S while the stack S is fixed by a gripper 51. The first press unit 50 includes a pair of first pressing blocks 50a and 50b, and the pair of first pressing blocks 50a and 50b has planar pressing surfaces for pressing, except for a groove of a shape corresponding to a fixing portion 51b of the gripper 51.

The gripper 51 may include a main body 51a having dimensions corresponding to a length (x) and a height (y) of the stack S or greater than the length (x) and height (y) of the stack S, and a plurality of fixing portions 51b each provided on one surface of the main body 51a in the form of a pillar or a plate extending along a width (z) direction of the stack S. Here, the length (x) of the stack S may refer to a portion of the stack with the longest distance from one end to the other end of the stack S, the height (y) may refer to a distance in a stacking direction of the stack S, and the width (z) may refer to a distance horizontally crossing an upper surface of the stack S.

The fixing portions 51b can be position-adjusted along the height direction of the main body 51a, so that the fixing portions 51b can fix the stack S while being in contact with upper and lower surfaces of the stack S. Then, the pair of first pressing blocks 50a and 50b of the first press unit 50 are moved in directions facing each other to surface-press one or more of the stack S and the gripper 51, making it possible to adhere the electrodes and the separator included in the stack S.

Referring to FIG. 6(b), the second press unit 60 may finally heat and press the stack S that has been primarily heated and pressed by the first press unit 50. The second press unit 60 includes a pair of second pressing blocks 60a and 60b, and the pair of second pressing blocks 60a and 60b can surface-press the stack S while moving in directions facing each other. In addition, the pair of second pressing blocks 60a and 60b of the second press unit 60 may have pressing surfaces for pressing in contact with the stack S, which are all planar surfaces.

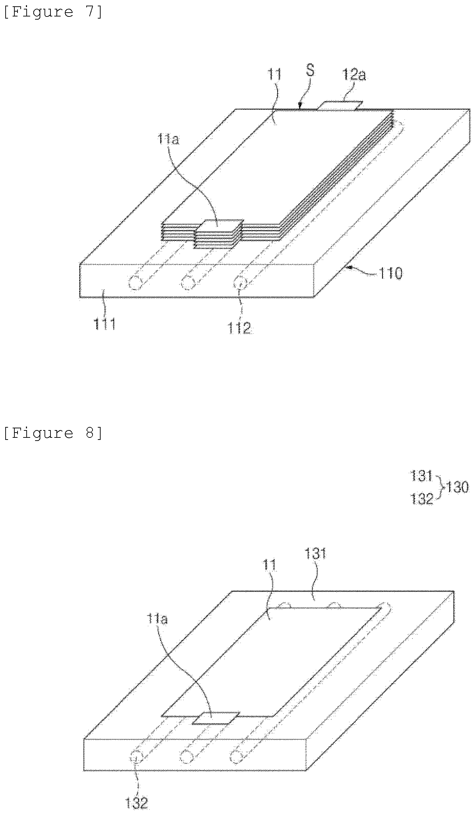

FIG. 7 is a perspective view showing a stack table in the electrode assembly manufacturing apparatus according to the exemplary embodiment of the present invention.

Referring to FIGS. 2, 3, and 7, the positive electrode 11, the separator 14, and the negative electrode 12 may be stacked on the stack table 110 such that the positive electrode 11 and the negative electrode 12 are alternately arranged between respective folds of the separator 14.

In addition, the stack table 110 may include a table body 111 on which the positive electrode 11, the separator 14, and the negative electrode 12 are stacked and a stack table heater 112 for heating the stacked stack S by heating the table body 111.

FIG. 8 is a perspective view showing a positive electrode seating table in the electrode assembly manufacturing apparatus according to the exemplary embodiment of the present invention.

Referring to FIGS. 2, 3, and 8, the positive electrode supply unit 130 may supply the positive electrode 11 to the positive electrode stacking unit 150 while heating the positive electrode 11.

In addition, the positive electrode supply unit 130 may include a positive electrode seating table 131 on which the positive electrode 11 is seated before being stacked on the stack table 110 by the positive electrode stacking unit 150 and a positive electrode heater 132 for heating the positive electrode 11 by heating the positive electrode seating table 131.

Note that the positive electrode supply unit 130 may further include a positive electrode roll 133 on which the positive electrode 11 is wound in the form of a sheet, a first cutter 134 for cutting the positive electrode 11 at regular intervals to form positive electrodes 11 with a predetermined size when the positive electrode 11 in the form of a sheet wound on the positive electrode roll 133 is unwound and supplied, a first conveyor belt 135 for moving the positive electrodes 11 cut by the first cutter 134, and a positive electrode supply head 136 for vacuum-suctioning the positive electrodes 11 being conveyed by the first conveyor belt 135 to seat the same on the positive electrode seating table 131. Here, the first cutter 134 may cut the positive electrode 11 in the form of a sheet so that a positive electrode tab 11a is formed to protrude from an end portion of the positive electrode when the positive electrode 11 is cut.

In this case, the cut positive electrode 11 may be stacked in the positive electrode magazine unit, and the description related to FIG. 1 may be applied to the method of picking up the positive electrode 11 stacked in the positive electrode magazine unit.

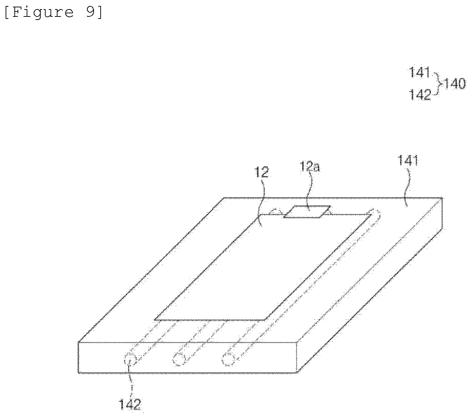

FIG. 9 is a perspective view showing a negative electrode seating table in the electrode assembly manufacturing apparatus according to the exemplary embodiment of the present invention.

Referring to FIGS. 2, 3, and 9, the negative electrode supply unit 140 may supply the negative electrode 12 to the negative electrode stacking unit 160 while heating the negative electrode 12.

In addition, the negative electrode supply unit 140 may include a negative electrode seating table 141 on which the negative electrode 12 is seated before being stacked on the stack table 110 by the negative electrode stacking unit 160 and a negative electrode heater 142 for heating the negative electrode 12 by heating the negative electrode seating table 141.

Note that the negative electrode supply unit 140 may further include a negative electrode roll 143 on which the negative electrode 12 is wound in the form of a sheet, a second cutter 144 for cutting the negative electrode 12 at regular intervals to form negative electrodes 12 with a predetermined size when the negative electrode 12 in the form of a sheet wound on the negative electrode roll 143 is unwound and supplied, a second conveyor belt 145 for moving the negative electrodes 12 cut by the second cutter 144, and a negative electrode supply head 146 for vacuum-suctioning the negative electrodes 12 being conveyed by the second conveyor belt 145 to seat the same on the negative electrode seating table 141. Here, the second cutter 144 may cut the negative electrode 12 in the form of a sheet so that a negative electrode tab 12a is formed to protrude from an end portion of the negative electrode when the negative electrode 12 is cut.

In this case, the cut negative electrode 12 may be stacked in the negative electrode magazine unit, and the description related to FIG. 1 may be applied to the method of picking up the negative electrode 12 stacked in the negative electrode magazine unit.

In an exemplary embodiment of the present invention, the positive electrode stacking unit may include a first suction head for vacuum-suctioning the positive electrode seated on the positive electrode seating table, and the negative electrode stacking unit may include a second suction head for vacuum-suctioning the negative electrode seated on the negative electrode seating table.

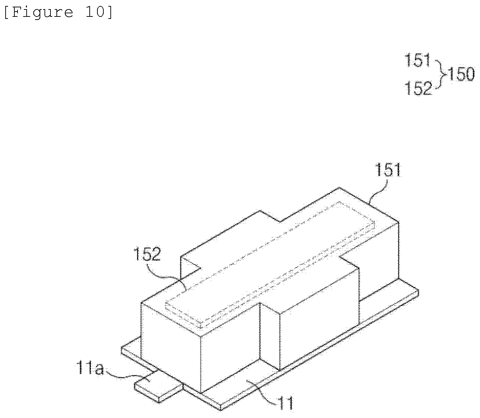

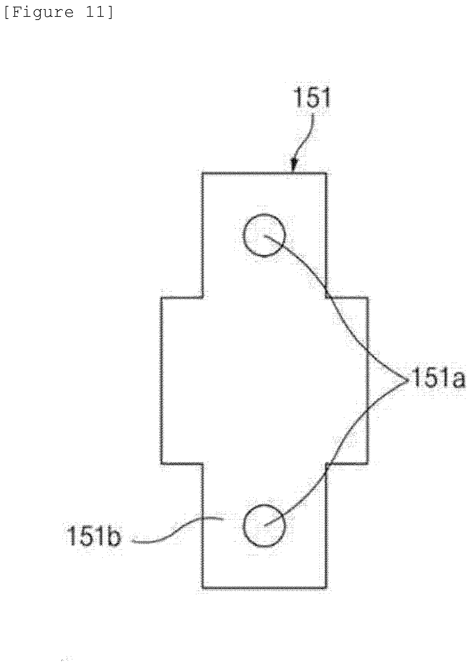

FIG. 10 is a perspective view showing a first suction head in the electrode assembly manufacturing apparatus according to the exemplary embodiment of the present invention, and FIG. 11 is a bottom view showing the first suction head in the electrode assembly manufacturing apparatus according to the exemplary embodiment of the present invention.

Referring to FIGS. 2, 3, 10, and 11, the positive electrode stacking unit 150 may stack the positive electrode 11 on the stack table 110.

In addition, the positive electrode stacking unit 150 may include a first suction head 151 and a first moving part 153.

The first suction head 151 can vacuum-suction the positive electrode 11 seated on the positive electrode seating table 131. In this case, the first suction head 151 has a vacuum suction hole 151a formed in a bottom surface 151b and can suction the positive electrode 11 through the vacuum suction hole 151a to fix the positive electrode 11 to the bottom surface 151b of the first suction head 151. Here, the first suction head 151 may be formed therein with a passage connecting the vacuum suction hole 151a and a vacuum suction device (not shown).

The first moving part 153 can move the first suction head 151 to the stack table 110 so that the first suction head 151 can stack the positive electrode 11 seated on the positive electrode seating table 131 on the stack table 110.

In addition, the negative electrode stacking unit 160 can stack the negative electrode 12 on the stack table 110. Here, the negative electrode stacking unit 160 may have the same structure as the positive electrode stacking unit 150 described above. In this case, the negative electrode stacking unit 160 may include a second suction head 161 and a second moving part 163.

The second suction head 161 can vacuum-suction the negative electrode 12 seated on the negative electrode seating table 141. In this case, the second moving part 163 can move the second suction head 161 to the stack table 110 so that the second suction head 161 can stack the negative electrode 12 seated on the negative electrode seating table 141 on the stack table 110.

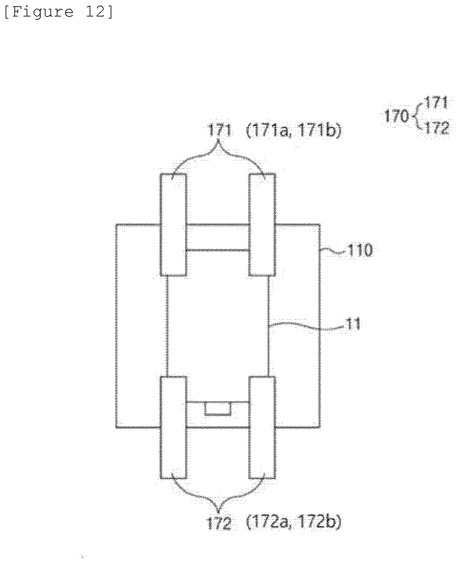

FIG. 12 is a plan view showing a holding mechanism and a stack table in the electrode assembly manufacturing apparatus according to the exemplary embodiment of the present invention.

Referring to FIGS. 2, 3, and 12, when the positive electrode 11 or the negative electrode 12 is stacked on the stack table 110, a holding mechanism 170 can fix the positive electrode 11 or the negative electrode 12 to the stack table 110 while gripping the positive electrode 11 or the negative electrode 12.

In addition, the holding mechanism 170 can press and fix an upper surface of the positive electrode 11 stacked on the uppermost side on the stack table 110 when stacking the positive electrodes 11 on the stack table 110, and can press and fix an upper surface of the negative electrode 12 stacked on the uppermost side on the stack table 110 when stacking the negative electrodes 12 on the stack table 110. Furthermore, the holding mechanism can press and fix an upper surface of a stack of the positive electrode 11, the separator 14, and the negative electrode 12 stacked on the stack table 110.

That is, when forming the stack while positioning and stacking the positive electrode 11 and the negative electrode 12 between the folds of the separator 14, the holding mechanism 170 grips the uppermost surface of the stack in a manner of pressing the same toward the stack table 110, making it possible to prevent the stack from being separated from the stack table 110.

Note that the holding mechanism 170 may include, for example, a first holding mechanism 171 and a second holding mechanism 172 and can fix both sides of the positive electrode 11 or the negative electrode 12.

In an example where the zigzag folding is performed while the stack table 110 is rotated as described above, when the holding mechanism 170 grips the positive electrode 11 or the negative electrode 12 and then the stack table 110 is rotated, the separator 14 may be unwound from the separator roll 122 in proportion to a rotation amount of the stack table 110 and supplied to the stack table 110 side.

Note that, for example, the holding mechanism 170 and the stack table 110 may be connected or coupled to a rotating device (not shown). Here, when the holding mechanism 170 grips the positive electrode 11 or the negative electrode 12, the rotating device can rotate the holding mechanism 170 and the stack table 110.

Then, when a stack with the positive electrode 11 and the negative electrode 12 arranged between the folds of the separator 14 is completed, the stack is fixed by a gripper, moved to the press unit described above, and then heated and pressed by the press unit.

In an exemplary embodiment of the present invention, the electrode assembly manufacturing apparatus may further include a rotation unit for rotating the stack table, the positive electrode stacking unit may be provided on one side of the rotation unit and the negative electrode stacking unit may be provided on the other side of the rotation unit for enabling zigzag folding in such a manner that the separator is positioned between the positive electrode and the negative electrode, and the rotation unit may be configured to alternately proceed with rotating the stack table toward one side so as to face the first suction head of the positive electrode stacking unit when stacking the positive electrode and rotating the stack table toward the other side so as to face the second suction head of the negative electrode stacking unit when stacking the negative electrode.

The electrode assembly manufacturing apparatus according to another embodiment of the present invention may further include a vision device for vision inspecting the positive electrode and the negative electrode.

The electrode assembly manufacturing apparatus according to another embodiment of the present invention may further include a rotation unit for rotating the stack table and a vision device for vision inspecting the positive electrode and the negative electrode.

An electrode assembly manufacturing apparatus according to another embodiment of the present invention may include a stack table moving unit for moving the stack table left and right or a separator guide unit for moving the separator left and right, and may further include a vision device for vision inspecting the positive electrode and the negative electrode. The stack table moving unit and the separator guide unit are not limited in forms as long as they respectively perform the functions of moving the stack table and the separator left and right, and devices generally used in the relevant field may be used.

In an exemplary embodiment of the present invention, the electrode assembly manufacturing apparatus may further include a stack table moving unit for moving the stack table left and right, a positive electrode stacking unit may be provided on one side of the stack table and a negative electrode stacking unit may be provided on the other side of the stack table for enabling zigzag folding in such a manner that the separator is positioned between the positive electrode and the negative electrode, and the stack table moving unit may be configured to alternately proceed with moving the stack table toward one side so as to face the first suction head of the positive electrode stacking unit when stacking the positive electrode and moving the stack table toward the other side so as to face the second suction head of the negative electrode stacking unit when stacking the negative electrode.

In an exemplary embodiment of the present invention, the electrode assembly manufacturing apparatus may include a separator guide unit for moving the separator left and right, and the separator guide unit may be configured to repeatedly proceed with moving a separator left and right, which is supplied to the stack table, for enabling zigzag folding in such a manner that the separator is positioned between the positive electrode and the negative electrode.

That is, the electrode assembly manufacturing apparatus according to an exemplary embodiment of the present invention may further include an additional component, depending on the method of moving the stack table or the method of supplying the separator.

In an exemplary embodiment of the present invention, the vision device may include a first camera and a second camera. The first camera may capture a positive electrode seated on the positive electrode seating table from the positive electrode supply unit, and the second camera may capture a negative electrode seated on the negative electrode seating table from the negative electrode supply unit. A stacking quality of the positive electrode and the negative electrode can be inspected through image information obtained through the capturing of the first camera and the second camera. More specifically, seating positions, sizes, stacking states, and the like of the positive electrode and negative electrode can be inspected.

In the present specification, the description of the electrode assembly manufacturing apparatus may be applied to the electrode assembly manufacturing method and the electrode assembly, and vice versa.

In addition, in an exemplary embodiment of the present invention, the positive electrode is manufactured by, for example, applying a mixture of a positive electrode active material, a conductive material, and a binder on a positive electrode current collector and then drying the same, and if necessary, a filler is added to the mixture. For the materials used in this case, materials that are commonly used in the relevant field may be used.

Specifically, examples of the positive electrode active material may include a layered compound such as lithium cobalt oxide (LiCoO₂) and lithium nickel oxide (LiNiO₂), or a compound substituted with one or more transition metals; a lithium manganese oxide such as chemical formula Li₁₊ₓMn₂₋ₓO₄ (where x is 0 to 0.33), LiMnO₃, LiMn₂O₃ and LiMnO₂; a lithium copper oxide (Li₂CuO₂); a vanadium oxide such as LiV₃O₈, LiFe₃O₄, V₂O₅ and Cu₂V₂O₇; a Ni-site type lithium nickel oxide represented by chemical formula LiNi₁₋ₓMₓO₂ (where M is Co, Mn, Al, Cu, Fe, Mg, B or Ga, and x is 0.01 to 0.3); a lithium manganese composite oxide represented by chemical formula LiMn₂₋ₓMₓO₂ (where M is Co, Ni, Fe, Cr, Zn or Ta, and x is 0.01 to 0.1) or Li₂Mn₃MO₈ (where M is Fe, Co, Ni, Cu or Zn); LiMn₂O₄ in which a part of Li of the chemical formula is substituted with an alkaline earth metal ion; a disulfide compound; and Fe₂(MoO₄)₃, but are not limited thereto.

Specifically, the positive electrode current collector is not particularly limited as long as it has high conductivity without causing a chemical change in the battery. For example, stainless steel, aluminum, nickel, titanium, fired carbon, aluminum, or stainless steel each surface-treated with carbon, nickel, titanium, silver, or the like, or the like may be used. Specifically, aluminum may be used. The positive electrode current collector may have microscopic irregularities formed on a surface to enhance an adhesive force of the positive electrode active material, and may be used in various forms such as a film, a sheet, a foil, a net, a porous body, a foamed body, or a non-woven fabric body. In addition, the positive electrode current collector may generally have a thickness ranging from 3 µm to 500 µm.

The conductive material may typically be added in an amount of 1 to 50 wt% based on a total weight of the mixture including the positive electrode active material. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The binder is a component assisting in the bonding of the active material, the conductive material, and the like and the bonding to the current collector, and is usually added in an amount of 1 to 50 wt% based on the total weight of the mixture including the positive electrode active material. Examples of such a binder may include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluorine rubber, various copolymers, and the like.

The filler is selectively used as a component to suppress expansion of the positive electrode, and is not particularly limited as long as it is a fibrous material that does not cause chemical changes in the battery. For example, an olefin-based polymer such as polyethylene and polypropylene; and a fibrous material such as glass fiber and carbon fiber may be used.

In addition, in an exemplary embodiment of the present invention, the negative electrode is manufactured by applying, drying and pressing the negative electrode active material on a negative electrode current collector, and if necessary, a conductive material, a binder, a filler, and the like as described above may be optionally further included. Also in this case, materials that are commonly used in the art may be used.

Specifically, as the negative electrode active material, for example, carbon such as non-graphitizable carbon and graphite-based carbon; metal composite oxides such as LixFe₂O₃ (0≤x≤1), LiₓWO₂ (0≤x≤1), and SnₓMe₁₋ₓMe' yOz (Me: Mn, Fe, Pb, Ge; Me': Al, B, P, Si, elements of Groups 1, 2 and 3 of the periodic table, and halogens; 0<x≤1; 1≤y≤3; 1≤z≤8); lithium metal; a lithium alloy; a silicon-based alloy; a tin-based alloy; a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; a conductive polymer such as polyacetylene; a Li-Co-Ni based material, and the like may be used.

Such a negative electrode current collector is not particularly limited as long as it has conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, like the positive electrode current collector, the negative electrode current collector may have microscopic irregularities formed on a surface to enhance an adhesive force of the negative electrode active material, and may be used in various forms such as a film, a sheet, a foil, a net, a porous body, a foamed body, or a non-woven fabric body. In addition, the negative electrode current collector may generally have a thickness ranging from 3 µm to 500 µm.

In an exemplary embodiment of the present invention, the separator may be an organic/inorganic composite porous SRS (Safety-Reinforcing Separator). The SRS may have a structure in which a coating layer component including inorganic particles and a binder polymer is applied on a polyolefin-based separator substrate.

Since the SRS does not undergo high-temperature thermal contraction due to the heat resistance of the inorganic particles, even if the electrode assembly is penetrated by a needle-like conductor, a rate of elongation of the safety separator can be maintained.

Such an SRS may have a uniform pore structure formed by an interstitial volume among inorganic particles as a coating layer component, in addition to a pore structure included in the separator substrate itself. The pores may not only significantly alleviate any external impacts applied to the electrode assembly, but may also facilitate the migration of lithium ions through the pores, as well as enable a large amount of electrolyte solution to be filled in the pores to show a high impregnation rate, thereby promoting improved performance of the battery.

In an exemplary embodiment of the present invention, the separator has separator surplus portions extending on both sides beyond widths of the positive electrode and the negative electrode based on a width direction, and has a structure in which a coating layer thicker than a thickness of the separator is formed on one surface or both surfaces of both sides of the separator surplus portions in order to prevent shrinkage of the separator.

In an exemplary embodiment of the present invention, the separator surplus portions may each have a size of 5% to 12% of the width of the separator.

In an exemplary embodiment of the present invention, the coating layer may be coated on both surfaces of the separator over a size of 50% to 90% of the width of the separator surplus portion on one side. In addition, the widths of the coating layers on both surfaces may be the same as or different from each other.

In an exemplary embodiment of the present invention, the coating layer may include inorganic particles and a binder polymer.

In an exemplary embodiment of the present invention, examples of the polyolefin-based separator component may include high-density polyethylene, linear low-density polyethylene, low-density polyethylene, ultra-high molecular weight polyethylene, polypropylene, derivatives thereof, or the like.

In an exemplary embodiment of the present invention, the thickness of the coating layer may be smaller than the thickness of the positive electrode or negative electrode. In a specific example, the thickness of the coating layer may be 30% to 99% of the thickness of the positive electrode or negative electrode.

In an exemplary embodiment of the present invention, the coating layer may be formed by wet coating or dry coating.

In an exemplary embodiment of the present invention, the polyolefin-based separator substrate and the coating layer may exist in a form in which pores on the surface of the substrate and the coating layer are anchored with each other, whereby the separator substrate and the active layer may be bonded physically firmly. In this case, the substrate and the active layer may have a thickness ratio from 9:1 to 1:9 and, specifically 5:5, considering the physical bonding force and the pore structure existing on the separator.

In an exemplary embodiment of the present invention, the inorganic particle may be inorganic particles that are commonly used in the art. The inorganic particles serve to form fine pores by enabling formation of empty spaces between the inorganic particles, and also serve as a kind of spacer that can maintain the physical shape. In addition, since the inorganic particles generally have properties that do not change their physical properties even at high temperatures of 200°C or higher, the resultant organic/inorganic composite porous film has excellent heat resistance.

Additionally, the inorganic particles are not particularly limited as long as they are electrochemically stable. That is, the inorganic particles that can be used in the present invention are not particularly limited as long as they do not undergo oxidation and/or reduction reactions in an operating voltage range of a battery to which they are applied (for example, 0 to 5 V based on Li/Li+). In particular, the use of inorganic particles having ion transport ability may promote improved performance by increasing the ionic conductivity in the electrochemical device. Thus, use of inorganic particles having ionic conductivity as high as possible is preferable. In addition, when the inorganic particles have a high density, it is difficult to disperse the inorganic particles during coating, and there is also a problem of weight increase during battery manufacturing. Therefore, use of inorganic particles having density as low as possible is preferable. In addition, inorganic materials having high permittivity contribute to an increase in the degree of dissociation of electrolyte salt, such as a lithium salt, in a liquid electrolyte, thereby improving the ionic conductivity of the electrolyte solution.

For the above-described reasons, the inorganic particles may be one or more types selected from the group consisting of inorganic particles having piezoelectricity and inorganic particles having lithium-ion transport ability.

The inorganic particles having piezoelectricity refer to a material that is a nonconductor at normal pressure but has a physical property of conducting electricity due to a change in an internal structure when a certain pressure is applied. The inorganic particles having piezoelectricity not only exhibit high-permittivity characteristics with a permittivity constant of 100 or more, but also serve to generate an electric potential difference between opposite surfaces by causing one surface to be positively charged and the other surface to be negatively charged due to charges generated when they are subjected to tension or compression by applying a certain pressure.

In a case where the inorganic particles having the above-described characteristics are used as a coating layer component, when an internal short circuit of both the electrodes occurs due to an external impact, such as by a needle-like conductor, the positive electrode and the negative electrode may not directly come into contact with each other due to the inorganic particles coated on the separator. Moreover, due to the piezoelectricity of the inorganic particles, an electric potential difference may occur in the particles, whereby electron movement, i.e., the flow of a minute current, may occur between both the electrodes, leading to a gentle reduction in the voltage of the battery and, thus, an improvement in safety.

Examples of materials for the inorganic particles having piezoelectricity may be one or more types selected from the group consisting of BaTiO₃, Pb(Zr,Ti)O₃ (PZT), Pb₁-ₓLaₓZr_{1-y}Ti_{y}O₃ (PLZT), PB (Mg₃Nb_{2/3}) O₃-PbTiO₃ (PMN-PT) and hafnia (HfO₂), but are not limited thereto.

The inorganic particles having lithium-ion transport ability refer to inorganic particles containing a lithium element but not storing lithium and instead having a function of migrating lithium ions. The inorganic particles having lithium-ion transport ability can transport and migrate lithium ions due to a kind of defect in a particle structure. As a result, the lithium ionic conductivity in the battery may be improved, thereby improving battery performance.

Examples of materials for the inorganic particles having lithium-ion transport ability may be one or more types selected from the group consisting of lithium phosphate (Li₃PO₄), lithium titanium phosphate (LiₓTi_{y} (PO₄) ₃, 0<x<2, 0<y<3), lithium aluminum titanium phosphate (LiₓAl_{y}Ti_{z}(PO₄)₃, 0<x<2, 0<y<1, 0<z<3), glass of ((LiAlTiP)ₓO_{y}, 0<x<4, 0<y<13) series, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), glass of SiS₂ (LiₓSi_{y}S_{z}, 0<x<3, 0<y<2, 0<z<4) series, and glass of P₂S₅ (LiₓP_{y}S_{z}, 0<x<3, 0<y<3, 0<z<7) series, but are not limited thereto.

A composition ratio of the inorganic particles and the binder polymer, which are components of the coating layer, is not particularly limited, but may be adjusted within a range from 10:90 to 99:1 by weight%, and is preferably within a range from 80:20 to 99:1 by weight%.

If the composition ratio is less than 10:90 by weight%, the content of the polymer becomes excessively large, so the pore size and porosity may be reduced due to a decrease in the empty space formed between the inorganic particles, finally resulting in deterioration in the battery performance. On the other hand, if the composition ratio exceeds 99:1 by weight%, the content of the polymer is too small, so the mechanical properties of the final organic/inorganic composite porous separator may be deteriorated due to weakened adhesive force between the inorganic materials.

In an exemplary embodiment of the present invention, the binder polymer may be a binder polymer that is commonly used in the art.

The coating layer of the organic/inorganic composite porous separator may further include other commonly known additives, in addition to the above-described inorganic particles and binder polymer.

In an exemplary embodiment of the present invention, the coating layer may be referred to as an active layer.

Although the present invention has been described in detail with reference to the specific examples, this is intended to specifically describe the present invention, and the electrode assembly manufacturing apparatus according to the present invention is not limited thereto. It is apparent that various implementations are possible by one skilled in the art within the technical spirit of the present invention.

### <Explanation of Reference Numerals and Symbols>

1: electrode pick-up unit
2: first electrode
3: second electrode
4: plurality of other electrodes
5: temperature sensor unit
6: temperature control unit
7: electrode magazine unit
10: electrode assembly
11: positive electrode
11a: positive electrode tab
12: negative electrode
12a: negative electrode tab
14: separator
50: first press unit
50a, 50b: first pressing block
51: gripper
51a: main body
51b: fixing portion
60: second press unit
60a, 60b: second pressing block
100: electrode assembly manufacturing apparatus
110: stack table
111: table body
112: stack table heater
120: separator supply unit
121: separator heating unit
122: separator roll
130: positive electrode supply unit
131: positive electrode seating table
132: positive electrode heater
133: positive electrode roll
134: first cutter
135: first conveyor belt
136: positive electrode supply head
140: negative electrode supply unit
141: negative electrode seating table
142: negative electrode heater
143: negative electrode roll
144: second cutter
145: second conveyor belt
146: negative electrode supply head
150: positive electrode stacking unit
151: first suction head
151a: vacuum suction hole
151b: bottom surface
152: first head heater
153: first moving part
160: negative electrode stacking unit
161: second suction head
162: second head heater
163: second moving part
170: holding mechanism
171: first holding mechanism
172: second holding mechanism
180: press unit
181: first pressing block
182: second pressing block
183, 184: press heater
S: stack
A: thin air layer
A': expanded air layer

## Claims

1. An electrode supply device comprising:
an electrode magazine unit in which a plurality of electrodes are stacked; and
an electrode pick-up unit configured to pick up an uppermost first electrode among the plurality of electrodes,
wherein at least one of the electrode magazine unit and the electrode pick-up unit comprises a heating unit configured to heat the first electrode and a second electrode adjacent to the first electrode to expand an air layer between the first electrode and the second electrode.

2. The electrode supply device of claim 1, wherein the electrode pick-up unit comprises:
an electrode fixing unit configured to fix the first electrode; and
an electrode conveying unit configured to convey the first electrode fixed by the electrode fixing unit to a stack table side.

3. The electrode supply device of claim 1, further comprising:
a temperature sensor unit configured to measure surface temperatures of the first electrode and the second electrode adjacent to the first electrode; and
a temperature control unit configured to adjust a temperature of the heating unit so that the surface temperatures measured by the temperature sensor unit satisfy a management temperature range.

4. The electrode supply device of claim 3, wherein the management temperature range is 40°C to 140°C.

5. The electrode supply device of claim 1, wherein the heating unit comprises a non-contact heat source not in physical contact with the first electrode and the second electrode.

6. The electrode supply device of claim 5, wherein the non-contact heat source is a radiant heat-type heat source, an induction heating-type heat source, or a laser-type heat source.

7. An electrode assembly manufacturing apparatus for manufacturing an electrode assembly in which a positive electrode and a negative electrode are alternately arranged between folds of a separator, the electrode assembly manufacturing apparatus comprising:
a positive electrode supply unit configured to supply the positive electrode to a stack table side;
a negative electrode supply unit configured to supply the negative electrode to the stack table side;
a separator supply unit configured to supply the separator to the stack table side;
a stack table on which a stack in which the positive electrode, the separator, and the negative electrode are stacked such that the positive electrode and the negative electrode are alternately arranged between the folds of the separator is manufactured; and
a press unit configured to heat and press the stack to adhere the positive electrode, the separator, and the negative electrode therebetween, thereby manufacturing an electrode assembly,
wherein at least one of the positive electrode supply unit and the negative electrode supply unit comprises the electrode supply device of any one of claims 1 to 6.

8. An electrode supply method comprising:
heating an uppermost first electrode and a second electrode adjacent to the first electrode among a plurality of electrodes stacked in an electrode magazine unit to expand an air layer between the first electrode and the second electrode; and
picking up, conveying, and supplying the first electrode to a stack table side.

9. The electrode supply method of claim 8, wherein the picking up, conveying, and supplying the first electrode to the stack table side comprises:
fixing the first electrode; and
conveying the fixed first electrode to the stack table side.

10. The electrode supply method of claim 8, wherein the heating the first electrode and the second electrode comprises:
measuring surface temperatures of the first electrode and the second electrode; and
performing heating while adjusting a temperature of a heat source so that the measured surface temperatures satisfy a management temperature range.

11. The electrode supply method of claim 10, wherein the management temperature range is 40°C to 140°C.

12. The electrode supply method of claim 10, wherein the heat source is a non-contact heat source not in physical contact with the first electrode and the second electrode.

13. The electrode supply method of claim 12, wherein the non-contact heat source is a radiant heat-type heat source, an induction heating-type heat source, or a laser-type heat source.

14. An electrode assembly manufacturing method for manufacturing an electrode assembly in which a positive electrode and a negative electrode are alternately arranged between folds of a separator, the electrode assembly manufacturing method comprising:
supplying the positive electrode to a stack table side;
supplying the negative electrode to the stack table side;
supplying the separator to the stack table side;
manufacturing a stack by stacking the positive electrode, the separator, and the negative electrode on a stack table such that the positive electrode and the negative electrode are alternately arranged between the folds of the separator; and
heating and pressing the stack to adhere the positive electrode, the separator, and the negative electrode therebetween, thereby manufacturing an electrode assembly,
wherein at least one of the supplying the positive electrode to the stack table side and the supplying the negative electrode to the stack table side comprises the electrode supply method of any one of claims 8 to 13.
